# EUROPÄISCHE PATENTSCHRIFT

(11) **EP 2 082 260 B1**
(45) Veröffentlichungstag und Bekanntmachung des Hinweises auf die Patenterteilung: **11.05.2011**
(21) Anmeldenummer: 07856005.9
(22) Anmeldetag: 13.11.2007
(51) Int. Cl.: G01S 13/56, G08B 13/24

(54) **VERFAHREN UND RADARANORDNUNG ZUR ÜBERWACHUNG EINES ÜBERWACHUNGSBEREICHS**
METHOD AND RADAR ARRANGEMENT FOR MONITORING A MONITORING AREA
PROCÉDÉ ET SYSTÈME DE RADAR POUR LA SURVEILLANCE D'UNE ZONE À SURVEILLER

(30) Priorität: 24.11.2006 DE 102006056111
(43) Veröffentlichungstag der Anmeldung: 29.07.2009
(73) Patentinhaber: S.M.S. Smart Microwave Sensors GmbH, 38106 Braunschweig (DE)
(72) Erfinder: MENDE, Ralph, 38108 Braunschweig (DE)
(74) Vertreter: Lins, Edgar
(86) Internationale Anmeldenummer: PCT/DE2007/002042
(87) Internationale Veröffentlichungsnummer: WO 2008/061496

(56) Entgegenhaltungen:
- DE-A1- 19 646 462
- US-A- 3 725 888
- US-A- 3 815 131
- US-A- 4 595 924

## Beschreibung

Die Erfindung betrifft ein Verfahren zur Überwachung eines Überwachungsbereichs mit einer Radaranordnung durch kontinuierliche Ausstrahlung eines Messsignals mit einem Radarsender und Empfang eines von einem bewegten Objekt reflektierten Empfangssignals durch einen Radarempfänger und Auswertung eines Dopplerfrequenzanteils im Empfangssignal zur Detektion des bewegten Objekts.

Die Erfindung betrifft ferner eine Radaranordnung zur Überwachung eines Überwachungsbereichs mit einem kontinuierlich ein Messsignal ausstrahlenden Radarsender, einem Radarempfänger für das vom einem bewegten Objekt reflektierte Messsignal und einer Auswertungseinrichtung zur Auswertung der Dopplerfrequenz zur Detektion des bewegten Objekts.

In zahlreichen Fällen ist es nötig, einen sicherheitsrelevanten Überwachungsbereich daraufhin zu überwachen, ob er unbefugt von Personen durchquert wird. Derartige Überwachungsbereiche schützen beispielsweise ein Gebäude vor dem Eindringen unbefugter Personen oder - im Falle einer Haftanstalt - alarmieren bei Ausbruchsversuchen.

Da die üblicherweise verwendeten optischen Sensoren in Form von Bewegungsmeldern zahlreiche Fehlalarme verursachen und darüber hinaus durch Einfluss von Nebel, Regen, Schneefall usw. witterungsempfindlich sind, wenn der Überwachungsbereich im Freien liegt, ist es bekannt für die Überwachung Radarsignale zu verwenden. Demgemäß wird in dem Überwachungsbereich ein Radarsender installiert, der den Überwachungsbereich oder einen Teil davon mit seinen ausgesandten Radarstrahlen überdeckt. Von Objekten in dem Überwachungsbereich reflektierte Radarstrahlen werden von einem Radarempfänger, der im Allgemeinen mit dem Radarsender kombiniert ist, empfangen und ausgewertet. Da ein Überwachungsbereich im Allgemeinen zahlreiche Radarstrahlen reflektierende, fest installierte Objekte beinhaltet, werden nur solche Objekte als relevant detektiert, die sich bewegen. Hierzu ist an den Radarempfänger eine Auswertungsstufe angeschlossen, die durch die Bewegung des Objekts entstandene Dopplerfrequenzanteile auswertet.

Kann ein Überwachungsgebiet nicht durch einen einzigen Radarsender überwacht werden, können mehrere Radarsender kettenartig angeordnet sein, sodass ein zweiter Radarsender den Überwachungsbereich des ersten Radarsenders fortsetzt. Auf diese Weise kann beispielsweise die gesamte Einfriedung einer Haftanstalt überwacht werden.

Durch die Verwendung von Radaranordnungen konnte die Anzahl der Fehlalarme gegenüber früheren optischen oder Infrarot-Bewegungsmeldern drastisch reduziert werden. Dennoch sind systembedingt weiterhin Fehlalarme möglich, beispielsweise durch im Überwachungsbereich laufende Kleintiere, wie Kaninchen, größere Vögel usw. Es ist grundsätzlich möglich, mit größerem technischen Aufwand auf der Seite der Radarsender und der Auswertungseinrichtungen eine Reduzierung der Fehlalarme zu erreichen, der hierfür erforderliche finanzielle Aufwand steht jedoch einer praktischen Umsetzung derartiger Lösungen entgegen.

DE 196 46 462 A1 offenbart ein System zur Überwachung des Eindringens von Personen oder Gegenständen in eine von Pfosten oder einem Rahmen umgrenzte Durchgangsöffnung. Statt der hierfür üblicherweise verwendeten Lichtschranken wird vorgeschlagen, eine Radarschranke zu verwenden. Wird die Radarschranke ohne Reflektor eingesetzt, wird das von einer bewegten Person beim Durchgang durch die Durchgangsöffnung reflektierte Radarsignal nach dem Doppler-Prinzip ausgewertet. Alternativ hierzu kann auf der anderen Seite der Durchgangsöffnung ein Reflektor fest angebracht sein. Dann wird die Dämpfung oder völlige Absorption der auf den Reflektor ausgesandten Strahlung durch den Radarsensor ausgewertet.

Durch US 3,725,888 ist es bekannt, für einen Einbruchsdetektor den DopplerEffekt auszunutzen, um bewegte Gegenstände zu detektieren. Hierfür wird ein Ultraschallsender aktiviert, der in dem zu überwachenden Raum eine permanente Ultraschallwelle generiert. Ein Empfänger vergleicht die ausgesandte Ultraschallfrequenz mit der empfangenen Ultraschallfrequenz. Befindet sich kein bewegter Gegenstand in dem zu überwachenden Raum sind die Frequenzen gleich. Durch einen bewegten Gegenstand entsteht ein DopplerFrequenzanteil, der als Einbruchssignal detektiert wird. Um zu Fehlalarm führende Einflüsse auszuschalten wird ein Fotodetektor als zweites Detektorsystem verwendet, mit dem Beleuchtungsänderungen detektiert werden. Ein Alarm wird nur ausgelöst, wenn beide Detektoren gleichzeitig ansprechen. Der Aufwand für zwei verschiedene Detektorsysteme wird durch die Vermeidung von Fehlalarmen gerechtfertigt.

Der vorliegenden Erfindung liegt daher die Aufgabe zugrunde, die Anzahl von Fehlalarmen einer Radar-Überwachungsanlage zu verringern, ohne eine wesentliche Erhöhung des Aufwandes für die Radaranordnung zu verursachen.

Zur Lösung dieser Aufgabe ist erfindungsgemäß ein Überwachungsverfahren der eingangs erwähnten Art, wobei zur Verifikation der Detektion des bewegten Objekts die Auswertung des Dopplerfrequenzanteils periodisch unterbrochen wird, wobei wenigstens ein Reflektor in einer definierten Position zum Reflektieren des von dem Radarsender ausgesandten Mess-signals zum Radarempfänger benutzt wird und wobei während der Unterbrechung der Auswertung des Dopplerfrequenzanteils nach Art einer Radar-Lichtschranke überprüft wird, ob oder in welcher Stärke ein von dem Reflektor reflektiertes Signal des Radarsenders vom Radarempfänger empfangen wird. Die Aufgabe wird ferner mit einer Doppler-Radaranordnung der eingangs erwähnten Art dadurch gelöst, dass wenigstens ein Reflektor im Ausstrahlungsbereich des Radarsenders vorgesehen ist, der ein vom Radarsender ausgestrahltes Radarsignal zum Radarempfänger hin reflektiert, dass die Auswertung der Dopplerfrequenz durch eine periodische Umschaltung der Radaranordnung unterbrochen wird und dass während der Unterbrechung die Radaranordnung nach Art einer Radar-Lichtschranke betrieben wird und die Auswertungseinrichtung auf eine Auswertung der Existenz oder Stärke des vom Radarempfänger empfangenen Radarsignals umschaltbar ist.

Gemäß der vorliegenden Erfindung arbeitet die Radaranordnung überwiegend in der herkömmlichen Weise zur Detektion bewegter Objekte durch Auswertung des Dopplerfrequenzanteils. Zur Verifizierung der Detektion der bewegten Objekte wird die Anlage periodisch umgeschaltet und mit entsprechend installierten Reflektoren nach Art einer Radar-Lichtschranke betrieben. Abgesehen von der Installation der Reflektoren ist für die erfindungsgemäße Radaranordnung kein wesentlicher zusätzlicher Hardware-Aufwand erforderlich, da die herkömmliche Radaranordnung für die Funktion einer Radar-Lichtschranke zusätzlich ausgenutzt wird.

Durch die Lichtschrankenfunktion ist es bei einer geeigneten Anbringung des Radarsenders und des wenigstens einen zugehörigen Reflektors möglich, eine Differenzierung zwischen sich bewegenden Kleintieren und bewegenden Personen vorzunehmen, indem beispielsweise der die Lichtschrankenfunktion ausübende reflektierte Strahl auf einer Höhe von 1 m über dem Boden verläuft, sodass der Strahl von Kleintieren üblicherweise nicht unterbrochen wird. Vorzugsweise sind mehrere Reflektoren im Ausstrahlungsbereich des Radarsenders angeordnet, sodass sich für einen Radarsender mehrere Lichtschrankenfunktionen ergeben. Dabei können die mehreren reflektierten Strahlen auf einen gemeinsamen Radarempfänger gelangen und als Summensignal ausgewertet werden oder es kann der Empfänger zum separaten Empfang mehrerer reflektierter Strahlen ausgebildet sein, die dann auch separat auswertbar sind.

Wenn der Überwachungsbereich durch mehrere Radarsender überwacht wird, ist es zweckmäßig, in gleicher Weise die entsprechenden Radar-Lichtschranken auszubilden, indem ein Reflektor für einen ersten Radarsender am Ort eines zweiten Radarsenders, der den Überwachungsbereich des ersten Radarsenders fortsetzt, angeordnet ist.

Die erfindungsgemäße Lichtschrankenfunktion hat ferner den Vorteil, dass auch stehende Objekte, also Personen die aus ihrer Bewegung verharren, erkannt werden, wenn sie sich im Bereich einer der Radar-Lichtschranken befinden.

Es ist ohne weiteres möglich, dass der Radarsender während der Umschaltung auf die Lichtschrankenfunktion sein bisheriges Radarsignal kontinuierlich weiter aussendet. Alternativ kann die Art des ausgesandten Radarsignals nach der Umschaltung auch geändert werden, um eine verbesserte Erkennbarkeit der ausgesandten Intensität zu erreichen.

In einer bevorzugten Ausführungsform der Erfindung ist der Radarsender zur Aussendung eines Radarsignals mit einer sich definiert ändernden Frequenz während der Unterbrechung der Auswertung der Dopplerfrequenz eingerichtet. Die sich ändernde Frequenz kann dabei vorzugsweise eine sich kontinuierlich und mit gleichmäßiger Steigung ansteigende oder abfallende Frequenzrampe sein. Da dabei das nach der Reflektion empfangene Signal eine andere Frequenz aufweist als das ausgesandte Radarsignal, ist eine definierte Detektion des empfangenen Radarsignals möglich, insbesondere wenn der Radarempfänger zur Mischung des empfangenen Radarsignals mit dem ausgesandten Radarsignal eingerichtet ist. Bei der Mischung entsteht ein Signal bei einer Differenzfrequenz, die aufgrund der definierten Position des Reflektors konstant und vorbekannt ist, sodass das von dem Reflektor reflektierte Radarsignal von anderen Radarsignalen, die von anderswo angeordneten, beispielsweise zufällig vorhandenen Reflektoren reflektiert werden, unterschieden werden kann.

Die periodische Umschaltung der Radaranlage findet nach dem jeweiligen Überwachungsbedarf statt. Vorteilhaft erscheint für viele Anwendungsfälle eine Unterbrechungshäufigkeit von 1 bis 10 Mal pro Sekunde.

Das Verhältnis der Überwachung des bewegten Objektes mit der Auswertung der Dopplerfrequenz zu der Lichtschrankenfunktion beträgt zeitlich vorzugsweise zwischen 3:1 und 6:1. So kann beispielsweise die Dauer der Überwachung des bewegten Objektes 100 ms betragen und dann jeweils für 20 ms die Lichtschrankenfunktion wirksam geschaltet werden, wodurch sich ein Verhältnis von 5:1 ergibt und die Unterbrechung ca. 8 mal pro Sekunde erfolgt.

Bei der Verwendung einer Frequenzrampe für den Lichtschrankenbetrieb kann während der Aussendephase (beispielsweise 20 ms) der Lichtschrankenfunktion eine Frequenzmodulation (Anstieg der Frequenz) um 75 MHz erfolgen. Steht ein Reflektor in einer definierten Abstandsposition von 50 m und steigt das ausgesandte Radarsignal in seiner Frequenz linear an, hat das empfangene Signal gegenüber dem momentan ausgesandten Signal einen Frequenzabstand von 1,25 kHz. Wenn das empfangene Signal mit dem ausgesandten Signal im Radarempfänger gemischt wird, entsteht somit eine Spektrallinie bei der Differenzfrequenz von 1,25 kHz. Somit kann die Reflektion von dem Reflektor in der definierten Position von anderen, zufälligen Reflektionen während des Lichtschrankenbetriebs unterschieden werden.

Im Rahmen der Erfindung ist es selbstverständlich nicht ausgeschlossen, die Überwachung des bewegten Objektes mit beispielsweise komplizierteren Messsignalen durchzuführen, um zusätzliche Informationen über die Entfernung des Objektes, Geschwindigkeit des Objektes, Winkelgeschwindigkeit der Bewegung usw. zu erhalten, wenn dies für sinnvoll oder notwendig angesehen wird.

Die Erfindung wird im Folgenden anhand von in der Zeichnung dargestellten Ausführungsbeispielen näher erläutert. Es zeigen:
- Figur 1: eine schematische Darstellung einer erfindungsgemäßen Radaranordnung mit Verdeutlichung der Lichtschrankenfunk- tion;
- Figur 2: eine Radaranordnung mit mehreren Radarsendern/ -empfängern, die zur Überwachung eines lang gestreckten Überwachungsbereichs aneinander anschließend angeord- net sind.

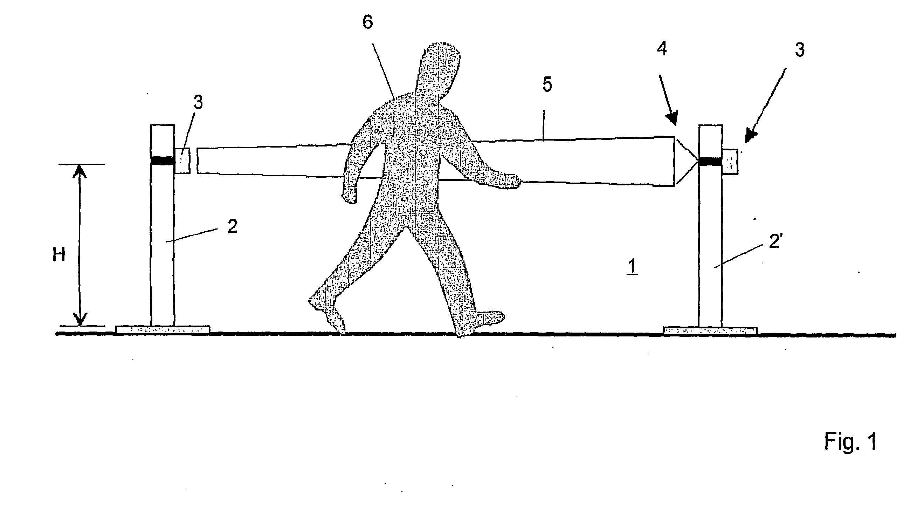

Figur 1 lässt einen in einem Überwachungsbereich 1 an einem Pfosten 2 montierten Radarsender/-empfänger 3 erkennen, der ein den Überwachungsbereich 1 weitgehend abdeckendes Radarsignal aussendet. Im dem Ausstrahlungsbereich des Radarsenders/-empfängers 3 ist an einem weiteren Pfosten 2' ein Reflektor 4 positioniert, der den von ihm eingefangenen Teil des ausgesandten Radarsignals zu einem reflektierten Strahl 5 bündelt und auf den im Radarsender/-empfänger 3 zurückstrahlt, sodass der reflektierte Radarstrahl 5 eine Art Lichtschranke bildet. An dem weiteren Pfosten 2' ist ein weiterer Radarsender/-empfänger 3 montiert, mit dem der Überwachungsbereich 1 fortgesetzt wird.

Während der überwiegenden Zeit strahlt der Radarsender/-empfänger 3 ein Messsignal aus, um von einem bewegten Objekt, hier von einer Person 6, reflektierte Radarstrahlen zu empfangen und aufgrund der Auswertung des Dopplerfrequenzanteils als bewegtes Objekt 6 zu erkennen. Nach einer Zeit von beispielsweise 100 ms wird die Anlage auf eine Lichtschrankenfunktion umgeschaltet, wobei im Radarsender/-empfänger 3 geprüft wird, ob ein von dem entsprechend positionierten Reflektor 4 reflektierter Strahl 5 empfangen wird oder nicht. Wird der reflektierte Strahl 5 nicht empfangen, spricht dies für die Unterbrechung der mit dem reflektierten Strahl gebildeten Lichtschranke durch eine Person 6, sodass die aus dem ausgewerteten Dopplerfrequenzanteil erhaltene Information über ein bewegtes Objekt durch die Lichtschrankenfunktion bestätigt wird.

Da der Radarsender/-empfänger 3 in einer geeigneten Höhe H angebracht ist und zweckmäßigerweise der Reflektor 4 in einer entsprechenden geeigneten Höhe angeordnet ist, ist es möglich, zwischen bewegten Objekten zu differenzieren, die die Höhe H erreichen bzw. nicht erreichen. So kann beispielsweise bei einer Justizvollzugsanstalt zwischen der Bewegung einer Person 6 und der Bewegung von Kleintieren unterschieden werden, wenn beispielsweise der Radarsender/-empfänger 3 in einer Höhe H von 1 m angeordnet ist.

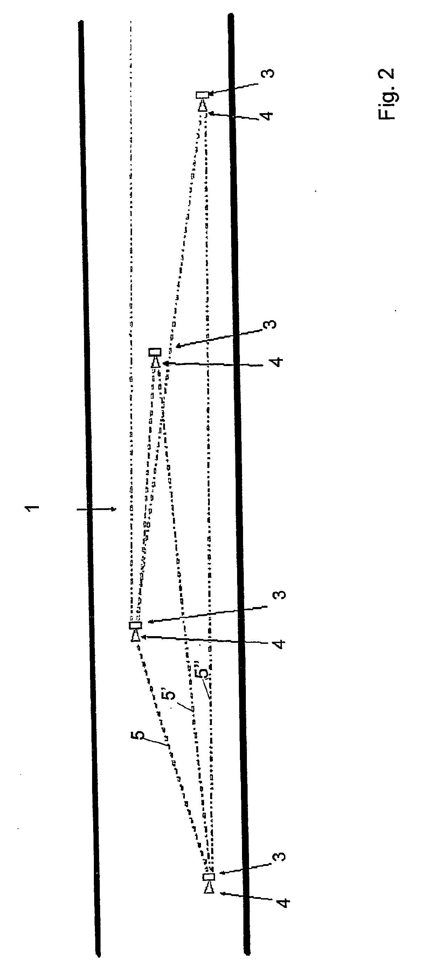

Figur 2 zeigt schematisch einen lang gestreckten Überwachungsbereich 1 mit vier in Längsrichtung des Überwachungsbereichs 1 hintereinander angeordneten Radarsender/-empfängern 3, die an ihrer Rückseite jeweils einen Reflektor 4 aufweisen. In dem dargestellten Beispiel sind die Radarsender/-empfänger seitlich zueinander versetzt, sodass die in Strahlrichtung hintereinander angeordneten weiteren Radarsender/-empfänger 3 jeweils einen Strahl 5, 5', 5" zum ausstrahlenden Radarsender/- empfänger 3 reflektieren. In entsprechender Fortführung dieser Anordnung bildet jeder Radarsender/-empfänger drei mit den Reflektoren 4 der in Strahlrichtung folgenden Radarsendern/-empfängern jeweils drei Lichtschranken 5, 5', 5"aus, wie dies in Figur 2 schematisch angedeutet ist.

Selbstverständlich ist es möglich, die einem Radarsender/-empfänger zugeordneten Reflektoren 4 auch auf unterschiedlichen Höhen anzuordnen, um insoweit schräg ansteigende oder schräg abfallende reflektierte Strahlen 5, 5', 5" in verschiedenen Höhen auszubilden, sodass die Vermeidung der mit den reflektieren Strahlen 5, 5', 5" gebildeten Lichtschranken komplizierter wird.

Es ist aus Figur 2 erkennbar, dass die in Längsrichtung des Überwachungsbereichs 1 hintereinander angeordneten Radarsender/-empfänger 3 geeignet sind, den gesamten Überwachungsbereich 1 sowohl bezüglich der Messfunktion aufgrund des Dopplerfrequenzanteils als auch hinsichtlich der Lichtschrankenfunktion auszufüllen.

## Patentansprüche

1. Verfahren zur Überwachung eines Überwachungsbereichs (1) mit einer Radaranordnung durch kontinuierliche Ausstrahlung eines Messsignals mit einem Radarsender (in 3) und Empfang eines von einem bewegten Objekt (6) reflektierten Empfangssignals durch einen Radarempfänger (in 3) und Auswertung eines Dopplerfrequenzanteils im Empfangssignal zur Detektion des bewegten Objekts, wobei zur Verifikation der Detektion des bewegten Objekts die Auswertung des Dopplerfrequenzanteils periodisch unterbrochen wird, wobei wenigstens ein Reflektor (4) in einer definierten Position zum Reflektieren des von dem Radarsender (in 3) ausgesandten Messsignals zum Radarempfänger (in 3) benutzt wird und wobei während der Unterbrechung der Auswertung des Dopplerfrequenzanteils nach Art einer Radar-Lichtschranke überprüft wird, ob oder in welcher Stärke ein von dem Reflektor (4) reflektiertes Signal des Radarsenders (in 3) vom Radarempfänger (in 3) empfangen wird.

2. Radaranordnung zur Überwachung eines Überwachungsbereichs (1) mit einem kontinuierlich ein Messsignal ausstrahlenden Radarsender (in 3), einem Radarempfänger (in 3) für das vom einem bewegten Objekt (6) reflektierte Messsignal und einer Auswertungseinrichtung zur Auswertung der Dopplerfrequenz zur Detektion des bewegten Objekts (6), wobei wenigstens ein Reflektor (4) im Ausstrahlungsbereich des Radarsenders (in 3) vorgesehen ist, der ein vom Radarsender (in 3) ausgestrahltes Radarsignal zum Radarempfänger (in 3) hin reflektiert, wobei die Auswertung der Dopplerfrequenz durch eine periodische Umschaltung der Radaranordnung unterbrochen wird und wobei während der Unterbrechung die Radaranordnung nach Art einer Radar-Lichtschranke betrieben wird und die Auswertungseinrichtung auf eine Auswertung der Existenz oder Stärke des vom Radarempfänger (in 3) empfangenen Radarsignals umschaltbar ist.

3. Radaranordnung nach Anspruch 2, **dadurch gekennzeichnet, dass** der Reflektor (4) zur Reflektion eines gebündelten Strahls (5) zum Radarempfänger (in 3) ausgebildet ist.

4. Radaranordnung nach Anspruch 2 oder 3, **dadurch gekennzeichnet, dass** mehrere Reflektoren (4) im Ausstrahlungsbereich des Radarsenders (in 3) angeordnet sind.

5. Radaranordnung nach Anspruch 4, **dadurch gekennzeichnet, dass** die mehreren reflektierten Strahlen (5, 5', 5") auf einen gemeinsamen Radarempfänger (in 3) gelangen und als Summensignal ausgewertet werden.

6. Radaranordnung nach Anspruch 4, **dadurch gekennzeichnet, dass** der Empfänger (in 3) zum separaten Empfang mehrerer reflektierter Strahlen (5, 5', 5") ausgebildet ist.

7. Radaranordnung nach einem der Ansprüche 2 bis 6, **dadurch gekennzeichnet, dass** ein Reflektor (4) für einen ersten Radarsender am Ort eines zweiten Radarsenders, der den Überwachungsbereich des ersten Radarsenders fortsetzt, angeordnet ist.

8. Radaranordnung nach einem der Ansprüche 2 bis 7, **dadurch gekennzeichnet, dass** der Radarsender (in 3) zur Aussendung eines Radarssignals mit einer sich definiert ändernden Frequenz während der Unterbrechung der Auswertung der Dopplerfrequenz eingerichtet ist.

9. Radaranordnung nach Anspruch 8, **dadurch gekennzeichnet, dass** der Radarempfänger (in 3) zur Mischung des empfangenen Radarsignals mit dem ausgesandten Radarsignal eingerichtet ist.

## Claims

1. Method for monitoring a monitoring area (1) with a radar arrangement by continuous emission of a measurement signal with a radar transmitter (in 3) and reception of a received signal, which has been reflected from a moving object (6), by a radar receiver (in 3) and evaluation of a Doppler frequency component in the received signal in order to detect the moving object, wherein, in order to verify the detection of the moving object, the evaluation of the Doppler frequency component is periodically interrupted, wherein at least one reflector (4) is used at a defined position in order to reflect the measurement signal, which has been transmitted by the radar transmitter (in 3), to the radar receiver (in 3), and wherein during the interruption of the evaluation of the Doppler frequency component a check is carried out in the method of a radar light barrier, to determine whether and with what strength a signal, which has been reflected from the reflector (4), of the radar transmitter (in 3) is being received by the radar receiver (in 3).

2. Radar arrangement for monitoring a monitoring area (1) comprising a radar transmitter (in 3) which emits a measurement signal continuously, a radar receiver (in 3) for the measurement signal which has been reflected from a moving object (6) and an evaluation device for evaluation of the Doppler frequency in order to detect the moving object (6), wherein at least one reflector (4) is provided in the emission area of the radar transmitter (in 3) and reflects a radar signal, which has been emitted from the radar transmitter (in 3), towards the radar receiver (in 3), wherein the evaluation of the Doppler frequency is interrupted by a periodic switching of the radar arrangement and wherein, during the interruption, the radar arrangement is operated in the method of a radar light barrier and the evaluation device can be switched to evaluation of the existence or strength of the radar signal received by the radar receiver (in 3).

3. Radar arrangement according to Claim 2, **characterized in that** the reflector (4) is designed to reflect a focused beam (5) to the radar receiver (in 3).

4. Radar arrangement according to Claim 2 or 3, **characterized in that** a plurality of reflectors (4) are arranged in the emission area of the radar transmitter (in 3).

5. Radar arrangement according to Claim 4, **characterized in that** the plurality of reflected beams (5, 5', 5") are passed to a common radar receiver (in 3) and are evaluated as a sum signal.

6. Radar arrangement according to Claim 4, **characterized in that** the receiver (in 3) is designed to receive a plurality of reflected beams (5, 5', 5") separately.

7. Radar arrangement according to one of Claims 2 to 6, **characterized in that** a reflector (4) for a first radar transmitter is arranged at the location of a second radar transmitter, which continues the monitoring area of the first radar transmitter.

8. Radar arrangement according to one of Claims 2 to 7, **characterized in that** the radar transmitter (in 3) is designed to emit a radar signal at a frequency which changes in a defined manner during the interruption of the evaluation of the Doppler frequency.

9. Radar arrangement according to Claim 8, **characterized in that** the radar receiver (in 3) is designed to mix the received radar signal with the emitted radar signal

## Revendications

1. Procédé de surveillance d'une zone à surveiller (1) comprenant un système radar, par émission continue d'un signal de mesure à l'aide d'un émetteur radar (dans 3) et réception d'un signal de réception réfléchi par un objet (6) en mouvement par un récepteur radar (dans 3) et traitement d'une composante de fréquence Doppler dans le signal de réception pour la détection de l'objet en mouvement, le traitement de la composante de fréquence Doppler étant périodiquement interrompu pour vérifier la détection de l'objet en mouvement, au moins un réflecteur (4) étant utilisé dans une position définie pour réfléchir vers le récepteur radar (dans 3) le signal de mesure envoyé par l'émetteur radar (dans 3), et, pendant l'interruption du traitement de la composante de fréquence Doppler, on vérifie à la manière d'une barrière photoélectrique-radar si ou avec quelle puissance un signal de l'émetteur radar (dans 3) réfléchi par le réflecteur (4) est reçu par le récepteur radar (dans 3).

2. Système radar pour surveiller une zone à surveiller (1) comprenant un émetteur radar (dans 3) émettant en continu un signal de mesure, un récepteur radar (dans 3) pour le signal de mesure réfléchi par un objet (6) en mouvement et un dispositif de traitement pour le traitement de la fréquence Doppler pour détecter l'objet (6) en mouvement, et il est prévu dans la zone couverte par l'émission de l'émetteur radar (dans 3) au moins un réflecteur (4) qui réfléchit vers le récepteur radar (dans 3) un signal radar émis par l'émetteur radar (dans 3), le traitement de la fréquence Doppler étant interrompu par une commutation périodique du système radar, et pendant l'interruption du système radar, le système radar est exploité à la manière d'une barrière photoélectrique-radar et le dispositif de traitement peut être commuté sur une évaluation de l'existence ou de la puissance du signal radar reçu par le récepteur radar (dans 3).

3. Système radar selon la revendication 2, **caractérisé en ce que** le réflecteur (4) est formé pour réfléchir vers le récepteur radar (dans 3) un rayonnement (5) en faisceau.

4. Système radar selon la revendication 2 ou 3, **caractérisé en ce que** plusieurs réflecteurs (4) sont agencés dans la zone couverte par l'émission de l'émetteur radar (dans 3).

5. Système radar selon la revendication 4, **caractérisé en ce que** les plusieurs rayonnements réfléchis (5, 5', 5") arrivent sur un récepteur radar (dans 3) commun et sont traités en tant que signal somme.

6. Système radar selon la revendication 4, **caractérisé en ce que** le récepteur (dans 3) est formé pour la réception séparée de plusieurs rayonnements réfléchis.

7. Système radar selon l'une quelconque des revendications 2 à 6, **caractérisé en ce qu'**un réflecteur (4) pour un premier émetteur radar est agencé à l'emplacement d'un deuxième émetteur radar, lequel prolonge la zone de surveillance du premier émetteur radar.

8. Système radar selon l'une quelconque des revendications 2 à 7, **caractérisé en ce que** l'émetteur radar (dans 3) est formé pour envoyer un signal radar ayant une fréquence variant de façon définie pendant l'interruption du traitement de la fréquence Doppler.

9. Système radar selon la revendication 8, **caractérisée en ce que** le récepteur radar (dans 3) est formé pour mélanger le signal radar reçu avec le signal radar envoyé.
